# EUROPEAN PATENT APPLICATION

(11) **EP 1 808 591 A2**
(43) Date of publication of application: **18.07.2007**
(21) Application number: 07100295.0
(22) Date of filing: 09.01.2007
(51) Int. Cl.: F02D 41/00, F02D 21/08, F02M 25/07

(54) **Exhaust gas recirculation control apparatus for internal combustion engine and control method of the same**

(30) Priority: 11.01.2006 JP 2006003150; 05.04.2006 JP 2006104139
(71) Applicant: Toyota Jidosha Kabushihi Kaisha, Aichi-ken Toyota-shi 471-8571 (JP)
(72) Inventor: SHIMIZU, Hajime, Toyota-shi, Aichi-ken 471-8571 (JP); NAGAE, Masahiro, Toyota-shi, Aichi-ken 471-8571 (JP); MURATA, Hiroki, Toyota-shi, Aichi-ken 471-8571 (JP); NAKAYAMA, Shigeki, Toyota-shi, Aichi-ken 471-8571 (JP); ONISHI, Tomomi, Toyota-shi, Aichi-ken 471-8571 (JP)
(74) Representative: Intes, Didier Gérard André

(57) **Abstract**

An exhaust gas recirculation control apparatus for an internal combustion engine comprises a turbocharger (6); a low-pressure EGR passage (14); a high-pressure EGR passage (12); and a differential pressure sensor (17). When the differential pressure sensor (17) detects a differential pressure greater than a specified differential pressure during recirculation of EGR gas, the low-pressure EGR passage (14) is used to recirculate a volume of EGR gas equivalent to a differential pressure equal to or smaller than the specified differential pressure, while the high-pressure EGR passage (12) is used to recirculate a remainder of a required flow volume.

## Description

### BACKGROUND OF THE INVENTION

### 1. Field of the Invention

The present invention relates to an exhaust gas recirculation control apparatus for an internal combustion engine and a control method of the exhaust gas recirculation control apparatus.

### 2. Description of the Related Art

Internal combustion engines can have an exhaust gas recirculation (hereinafter referred to as "EGR") system. It recirculates the exhaust gas into the engine to reduce NOx emissions from the engine. EGR is a well-known technology for internal combustion engines to lower the production of NOx by means of flowing the exhaust gas back into the engine to reduce the combustion temperature therein.

Homogeneous charge compression ignition combustion can also be combined with EGR to reduce the combustion temperature. In the homogeneous charge compression ignition combustion, well-mixed fuel/air charge is burnt, resulting in lower combustion temperature and consequently lower NOx emissions.

One of the examples of the EGR technology has been disclosed for internal combustion engines where either normal combustion or homogeneous charge compression ignition combustion is selectively performed depending on the operating conditions of the engine. The EGR system has two EGR passages: high-pressure EGR passage and low-pressure EGR passage, which are used selectively depending on the operating conditions of the engine and the type of combustion. The high-pressure EGR passage communicates the exhaust manifold and the intake manifold with each other, while the low-pressure EGR passage communicates the downstream side of a turbine of a supercharger (or turbocharger) and the upstream side of a compressor with each other (see JP-A-2004-150319).

In the EGR system for internal combustion engines having the high-pressure EGR passage and the low-pressure EGR passage, a differential pressure between the inlet and outlet of the low-pressure EGR passage is not sufficient enough to recirculate a recirculated exhaust gas (hereinafter referred to as "EGR gas") in large volume in the low-medium engine speed and low-medium load range. Nonetheless, should a large volume of EGR gas be recirculated using the low-pressure EGR passage, a sufficient differential pressure between the inlet and outlet of the low-pressure EGR passage need be ensured. However, while a large volume of EGR gas is recirculated under the sufficient differential pressure between the inlet and outlet of the low-pressure EGR passage, the EGR exhaust gas flow volume increases as the differential pressure between the inlet and outlet of the low-pressure EGR passage increases. This can result in higher pumping losses throughout the internal combustion engine, causing lower fuel efficiency.

### SUMMARY OF THE INVENTION

The present invention provides an EGR technology more suitable for recirculating a large volume of EGR gas, while preventing a differential pressure between the inlet and outlet of the low-pressure EGR passage from excessively increasing.

The following configurations are employed according to the aspects of the invention. In accordance with one aspect of the invention, an exhaust gas recirculation control apparatus for an internal combustion engine has: a turbocharger driven by exhaust gas from the internal combustion engine for forcing air into the engine; a low-pressure EGR passage for drawing part of exhaust gas as EGR gas from an exhaust passage downstream of a turbine of the turbocharger to recirculate the EGR gas into an intake passage upstream of a compressor of the turbocharger; a high-pressure EGR passage for drawing part of exhaust gas as EGR gas from the exhaust passage upstream of the turbine of the turbocharger to recirculate the EGR gas into the intake passage downstream of the compressor of the turbocharger; and means for detecting a differential pressure between an inlet and outlet of the low-pressure EGR passage, in which when the differential pressure detecting means detect a differential pressure greater than a specified differential pressure during recirculation of the EGR gas, the low-pressure EGR passage is used to recirculate a volume of EGR gas equivalent to a differential pressure equal to or smaller than the specified differential pressure, while the high-pressure EGR passage is used to recirculate a remainder of a required EGR gas flow volume.

In the low-medium engine speed and low-medium load range, the differential pressure between the inlet and outlet of the low-pressure EGR passage is not sufficient enough to recirculate a large volume of EGR gas through the low-pressure EGR passage. Nonetheless, should a large volume of EGR gas be recirculated using the low-pressure EGR passage, a sufficient differential pressure between the inlet and outlet of the low-pressure EGR passage need be ensured. However, while a large volume of EGR gas is recirculated under the sufficient differential pressure between the inlet and outlet of the low-pressure EGR passage, the EGR gas flow volume increases as the differential pressure between the inlet and outlet of the low-pressure EGR passage increases. This can result in higher pumping losses throughout the internal combustion engine, causing lower fuel efficiency.

Therefore, in accordance with the aspect of the invention, when the differential pressure detecting means detects a differential pressure greater than the specified differential pressure during recirculation of the EGR gas, the low-pressure EGR passage is used to recirculate a volume of EGR gas equivalent to a differential pressure equal to or smaller than the specified differential pressure, while the high-pressure EGR passage is used to recirculate a remainder of the required EGR gas flow volume.

The specified differential pressure is a preset differential pressure. In accordance with further aspect of the invention, the specified differential pressure may be a maximum differential pressure between the inlet and outlet of the low-pressure EGR passage, at which pumping losses in the internal combustion engine do not increase, while the lowering of fuel efficiency is inhibited during the EGR control using the low-pressure EGR passage. In place of the differential pressure between the inlet and outlet of the low-pressure EGR passage, any differential pressure may be used that is equivalent to the differential pressure directly measured between the inlet and outlet of the low-pressure EGR passage. For instance, a differential pressure, measured or estimated between the exhaust passage adjacent to the inlet of the low-pressure EGR passage and the intake passage adjacent to the outlet of the low-pressure EGR passage, may also be used.

According to this aspect, the EGR control using the low-pressure EGR passage allows only to recirculate the volume of EGR gas equivalent to a differential pressure equal to or smaller than the specified differential pressure, but not to recirculate the volume of EGR gas equivalent to the excess over the flow volume for the specified differential pressure. Thus, the differential pressure between the inlet and outlet of the low-pressure EGR passage need not be increased from the specified differential pressure. Also, the high-pressure EGR passage is additionally used for EGR with a remainder of the required EGR gas flow volume, other than the flow volume recirculated by the low-pressure EGR passage. Therefore, a large volume of EGR is achieved regardless of the use of the low-pressure EGR passage.

That is, the differential pressure between the inlet and outlet of the low-pressure EGR passage need not be increased from the specified differential pressure, while attaining a large volume of EGR. This prevents pumping losses in the internal combustion engine from increasing and thus fuel efficiency from lowering, consequently providing better EGR control.

When the differential pressure detecting means detects a differential pressure greater than the specified differential pressure during recirculation of the EGR gas, the low-pressure EGR passage may be used to recirculate a volume of EGR gas flow equivalent to the specified differential pressure. This allows the differential pressure between the inlet and outlet of the low-pressure EGR passage to be maintained at the maximum value that prevents pumping losses in the internal combustion engine from increasing and thus fuel efficiency from lowering, consequently providing better EGR control.

In accordance with still further aspect of the invention, when coolant temperature in the internal combustion engine is equal to or lower than a specified temperature, additionally using the high-pressure EGR passage for recirculation is prohibited. In accordance with still further aspect of the invention, the specified temperature is considered as a preset threshold temperature under which high concentration of hydrocarbon (HC) is emitted from the internal combustion engine. At the coolant temperature equal to or lower than the specified temperature, exhaust gas from the internal combustion engine contains high concentration of HC. Under such conditions, the high-pressure EGR passage is used to recirculate the exhaust gas that contains high concentration of HC and passes through the high-pressure EGR valves, which may cause these valves to be stuck in the open or closed position. In order to overcome the foregoing disadvantages, when the coolant temperature in the internal combustion engine is equal to or lower than a specified temperature, recirculation additionally using the high-pressure EGR passage is prohibited. This prevents exhaust gas, containing high concentration of HC and emitted from the internal combustion engine due to the low coolant temperature, from being recirculated through the high-pressure EGR passage, so that no such exhaust gas passes through the high-pressure EGR valve disposed inside the high-pressure EGR passage. This therefore prevents the high-pressure EGR valve from being stuck in the open or closed position due to the passage of exhaust gas containing high concentration of HC through the high-pressure EGR valve. Accordingly, more reliable performance of the high-pressure EGR passage is ensured.

In accordance with still further aspect of the invention, the specified differential pressure may vary depending on transient conditions of the internal combustion engine. Under the transient conditions of the internal combustion engine, variations in differential pressure between the inlet and outlet of the low-pressure EGR passage occur temporarily. However, for this phenomenon, the EGR control with the use of the low-pressure EGR passage alone may undesirably continue or be shifted to the combined use of the low-pressure EGR passage and the high-pressure EGR passage. In order to overcome the foregoing disadvantages, the specified differential pressure is varied depending on transient conditions of the internal combustion engine. This prevents the EGR control with the use of the low-pressure EGR passage alone from undesirably continuing or being shifted to the combined use of the low-pressure EGR passage and the high-pressure EGR passage upon the temporal variations in differential pressure between the inlet and outlet of the low-pressure EGR passage under transient conditions of the internal combustion engine.

In accordance with still further aspect of the invention, the specified differential pressure may be increased when the vehicle is in a transient acceleration condition that exceeds a specified acceleration rate. The specified acceleration rate is considered as a preset threshold over which the EGR control is undesirably shifted from the use of the low-pressure EGR passage alone to the combined use of the low-pressure EGR passage and the high-pressure EGR passage upon the temporal rise in differential pressure between the inlet and outlet of the low-pressure EGR passage. A temporal rise in differential pressure between the inlet and outlet of the low-pressure EGR passage occurs when the vehicle is in a transient acceleration condition that exceeds the specified acceleration rate. Accordingly, the specified differential pressure is increased. Therefore, despite the temporal rise in differential pressure between the inlet and outlet of the low-pressure EGR passage, the EGR control is not shifted from the use of the low-pressure EGR passage alone to the combined use of the low-pressure EGR passage and the high-pressure EGR passage.

In accordance with still further aspect of the invention, the specified differential pressure may be decreased when the vehicle is in a transient deceleration condition that exceeds a specified deceleration rate. The specified deceleration rate is considered as a preset threshold over which the EGR control is not undesirably shifted from the use of the low-pressure EGR passage alone to the combined use of the low-pressure EGR passage and the high-pressure EGR passage upon the temporal drop in differential pressure between the inlet and outlet of the low-pressure EGR passage. A temporal drop in differential pressure between the inlet and outlet of the low-pressure EGR passage occurs when the vehicle is in a transient deceleration condition that exceeds the specified deceleration rate. Accordingly, the specified differential pressure is decreased. Therefore, despite the temporal drop in differential pressure between the inlet and outlet of the low-pressure EGR passage, the EGR control is shifted from the use of the low-pressure EGR passage alone to the combined use of the low-pressure EGR passage and the high-pressure EGR passage.

In accordance with still further aspect of the invention, a control method includes the steps of: recirculating a volume of EGR gas equivalent to a differential pressure equal to or smaller than the specified differential pressure, using the low-pressure EGR passage; and recirculating a remainder of the required EGR gas flow volume, using the high-pressure EGR passage, when the differential pressure between the inlet and outlet of the low-pressure EGR passage is greater than the specified differential pressure during recirculation of the EGR gas.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG 1 illustrates a schematic diagram of an internal combustion engine and an intake and exhaust system thereof, to which an EGR system is applied;
FIG. 2 illustrates a flowchart of EGR control according to the first embodiment;
FIG. 3 illustrates a flowchart of EGR control according to the second embodiment;
FIG. 4 illustrates a flowchart of the first EGR control according to the third embodiment; and
FIG. 5 illustrates a flowchart of the second EGR control according to the third embodiment.

### DETAILED DESCRIPTION OF THE PREFERRED EMBODIMENTS

Specific embodiments of the present invention will be described below in detail.

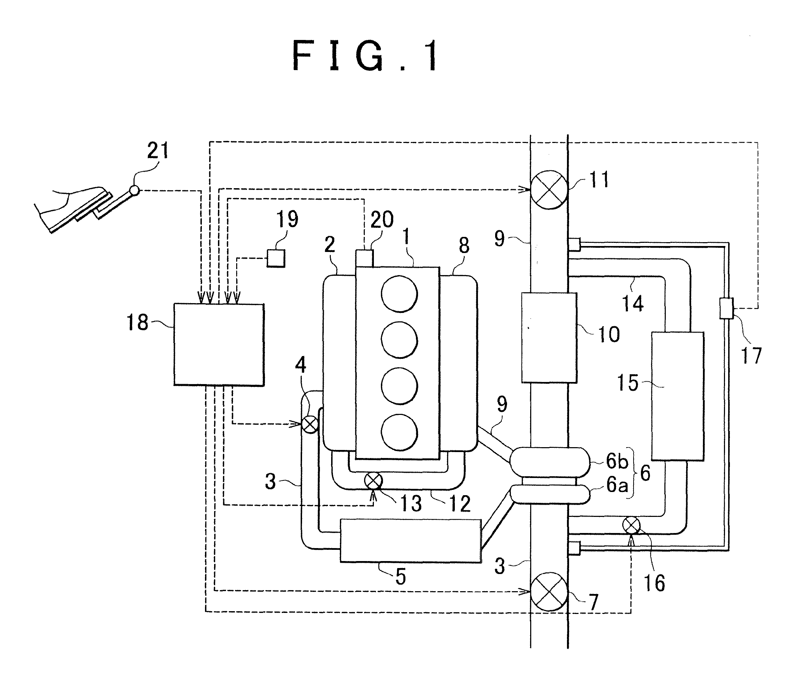

[First Embodiment] The first embodiment is directed to where the present invention is applied to an internal combustion engine for driving a vehicle. FIG. 1 illustrates a schematic diagram of the internal combustion engine and an intake/exhaust system thereof according to the embodiments of the invention.

As shown in FIG. 1, an internal combustion engine 1 is designed to select between normal combustion and homogeneous charge compression ignition combustion.

An intake manifold 2 is connected to the internal combustion engine 1. An intake pipe 3 is connected to the intake manifold 2. The intake pipe 3 is provided with a throttle valve 4. An intercooler 5 is provided upstream of the throttle valve 4 on the intake pipe 3. A turbocharger 6 includes a compressor 6a provided upstream of the intercooler 5. An intake control valve 7 is provided upstream of the compressor 6a. The intake pipe 3 aspirates air from the upstream side of the intake control valve 7. The intake manifold 2 and the intake pipe 3 form an intake passage.

In turn, an exhaust manifold 8 is connected to the internal combustion engine 1. An exhaust pipe 9 is connected to the exhaust manifold 8. A turbine 6b of the turbocharger 6 is provided in the exhaust pipe 9. A filter 10 for trapping particulate matter (PM) in exhaust gas is provided downstream of the turbine 6b. An exhaust control valve 11 is provided downstream of the filter 10. The exhaust pipe 9 is led to atmosphere on the downstream side of the exhaust control valve 11. The exhaust manifold 8 and the exhaust pipe 9 form an exhaust passage.

A high-pressure EGR passage 12 communicates the exhaust manifold 8 and the intake manifold 2 with each other. In other words, the high-pressure EGR passage 12 communicates a part of the exhaust passage on the upstream side of the turbine 6b with a part of the intake passage on the downstream side of the compressor 6a. The high-pressure EGR passage 12 has a high-pressure EGR valve 13 for regulating the volume of EGR gas through the high-pressure EGR passage 12.

In turn, a low-pressure EGR passage 14 communicates a part of the exhaust pipe 9 between the downstream side of the filter 10 and the upstream side of the exhaust control valve 11 with a part of the intake pipe 3 between the upstream side of the compressor 6a and the downstream side of the intake control valve 7.

The low-pressure EGR passage 14 has a low-pressure EGR cooler 15 for cooling the EGR gas flowing through the low-pressure EGR passage 14 and a low-pressure EGR valve 16 for regulating the volume of the EGR gas through the low-pressure EGR passage 14. The opening degrees of the exhaust control valve 11 and the intake control valve 7 are adjusted to control the pressures in the exhaust pipe 9 and the intake pipe 3. This allows regulating the volume of the EGR gas flowing into the low-pressure EGR passage 14.

A differential pressure sensor 17 is provided to detect a differential pressure between the inlet and outlet of the low-pressure EGR passage 14, located respectively on the exhaust pipe 9 and the intake pipe 3.

Beside the internal combustion engine 1 having the aforementioned components, an electrical control unit 18 (hereinafter referred to as "ECU") is also installed to control the internal combustion engine 1. The ECU 18 is a computer designed to control operation of the internal combustion engine 1 in response to the driving conditions thereof and the request from the driver.

The ECU 18 is electrically connected to the differential pressure sensor 17, a coolant temperature sensor 19 for detecting the temperature of coolant flowing around the internal combustion engine 1, a crank position sensor 20, and an accelerator opening sensor 21. The ECU 18 receives signals from the differential pressure sensor 17, the coolant sensor 19, the crank position sensor 20, and the accelerator opening sensor 21. In addition, the ECU 18 is also electrically connected to the throttle valve 4, the intake control valve 7, the exhaust control valve 11, the high-pressure EGR valve 13, the low-pressure EGR valve 16, and fuel injection valves (not shown) for cylinders in the internal combustion engine 1. The ECU 18 generates control signals to control these devices.

According to the first embodiment, to perform the EGR control using the high-pressure EGR passage 12, the ECU 18 adjusts the opening degree of the high-pressure EGR valve 13 to regulate the volume of the EGR gas to be recirculated to the internal combustion engine 1 through the high-pressure EGR passage 12.

In turn, to perform the EGR control using the low-pressure EGR passage 14, the ECU 18 controls the exhaust control valve 11 and the intake control valve 7 such that they move in a closing direction, and opens the low-pressure EGR valve 16. The opening degree of the low-pressure valve 16 is adjusted to regulate the volume of the EGR gas to be recirculated to the internal combustion engine I through the low-pressure EGR passage 14.

In the low-medium engine speed and low-medium load range, the differential pressure between the inlet and outlet of the low-pressure EGR passage 14 is not sufficient enough to recirculate a large volume of EGR gas through the low-pressure EGR passage 14. Nonetheless, should a large volume of EGR gas be recirculated using the low-pressure EGR passage 14, a sufficient differential pressure between the inlet and outlet of the low-pressure EGR passage 14 need be ensured. However, while a large volume of EGR gas is recirculated under the sufficient differential pressure between the inlet and outlet of the low-pressure EGR passage 14, the EGR gas flow volume increases as the differential pressure between the inlet and outlet of the low-pressure EGR passage 14 increases. This can result in higher pumping losses throughout the internal combustion engine 1, causing lower fuel efficiency.

Thus, according to the first embodiment, during the EGR control using the low-pressure EGR passage 14 alone, if the differential pressure sensor 17 detects a differential pressure greater than a specified differential pressure preset for the low-medium engine speed and low-medium load range, then the high-pressure EGR passage 12 is additionally used for the EGR control.

More specifically, during the EGR control using the low-pressure EGR passage 14 alone in order to meet a required flow volume (required EGR gas flow volume), the actual EGR gas flow volume increases as the required flow volume increases in the low-medium engine speed and low-medium load range. Accordingly, if the differential pressure sensor 17 detects a differential pressure greater than the specified differential pressure, then the EGR gas flow volume is controlled using the low-pressure EGR passage 14 such that the differential pressure between the inlet and outlet of the low-pressure EGR passage 14 remains not greater than the specified differential pressure, but equal to the specified differential pressure. In combination with this, the high-pressure EGR passage 12 is also used for EGR with a remainder of the required flow volume or an excess over the flow volume for the specified differential pressure.

This allows the EGR control using the low-pressure EGR passage 14 to only recirculate the volume of EGR gas by which the differential pressure does not exceed the specified differential pressure, but not to recirculate the volume of EGR gas equivalent to the excess over the flow volume for the specified differential pressure. Thus, the differential pressure between the inlet and outlet of the low-pressure EGR passage 14 need not be increased from the specified differential pressure. Also, the high-pressure EGR passage 12 is additionally used for EGR with a remainder of the required flow volume or an excess over the flow volume for the specified differential pressure. Therefore, a large volume of EGR is achieved regardless of the use of the low-pressure EGR passage 14.

This prevents the differential pressure between the inlet and outlet of the low-pressure EGR passage 14 from excessively increasing, while attaining a large volume of EGR. The situation is thus avoided where as the differential pressure between the inlet and outlet of the low-pressure EGR passage 14 increases, the EGR gas flow volume increases, resulting in higher pumping losses throughout the internal combustion engine 1 and thus lower fuel efficiency. Consequently, better EGR control is provided.

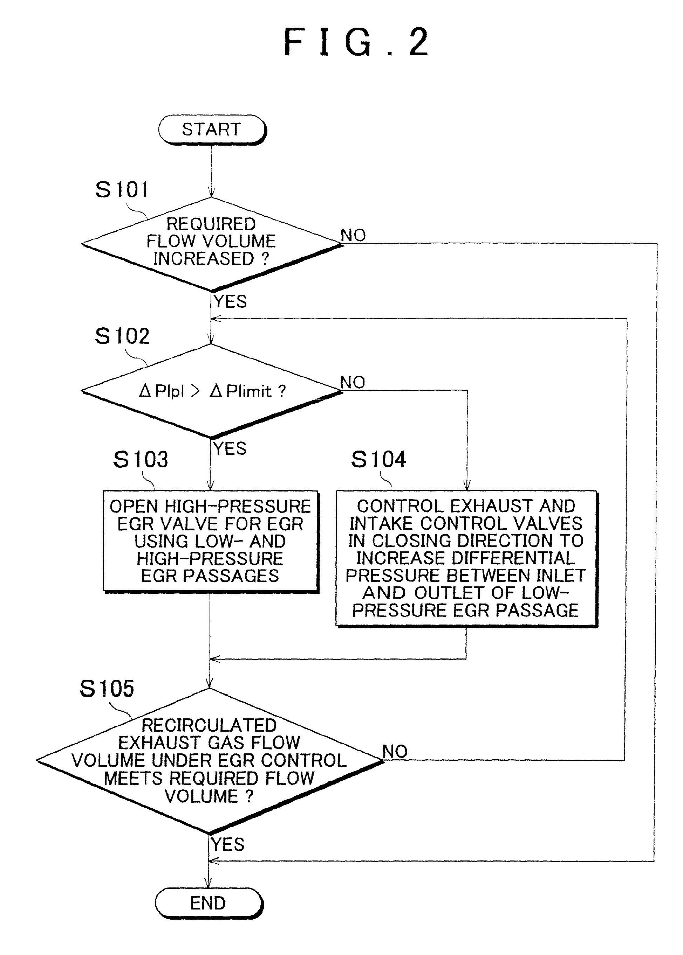

Now, a routine of the EGR control using the low-pressure EGR passage 14 and the high-pressure EGR passage 12 according to the second embodiment will be described below with reference to a flowchart in FIG. 2. It should be noted that this routine, stored in the ECU 18 in advance, is executed at predetermined time intervals during the EGR control using the low-pressure EGR passage 14 alone with the low-pressure EGR valve 16 opened under operation of the internal combustion engine 1.

In the step S101 in the routine, a determination is made as to whether or not a required EGR gas flow volume has increased in the low-medium engine speed and low-medium load range during the EGR control using the low-pressure EGR passage 14 alone. The required EGR gas flow volume refers to a target flow volume to follow under EGR control, which varies depending on changes in operation range or in temperature of coolant flowing around the internal combustion engine 1.

In the step S101, if the determination is No, that is, the required EGR gas flow volume has not increased, the execution of the routine is terminated. On the other hand, if the determination is Yes, that is, the required EGR gas flow volume has increased, the routine goes to the step S102.

In the step S102, a determination is made as to whether or not the differential pressure ΔPlpl between the inlet and outlet of the low-pressure EGR passage 14, detected by the differential pressure sensor 17, is greater than a specified differential pressure ΔPlimit (ΔPlpl > ΔPlimit ?). The specified differential pressure ΔPlimit is a maximum differential pressure between the inlet and outlet of the low-pressure EGR passage 14, at which pumping losses in the internal combustion engine 1 do not increase, while the lowering of fuel efficiency is inhibited during the EGR control using the low-pressure EGR passage 14.

In the step S102, if the determination is Yes, that is, the differential pressure ΔPlpl between the inlet and outlet of the low-pressure EGR passage 14 is greater than the specified differential pressure ΔPlimit (ΔPlpl > ΔPlimit), the routine goes to the step S103. On the other hand, if the determination is No, that is, the differential pressure ΔPlpl between the inlet and outlet of the low-pressure EGR passage 14 is not greater than the specified differential pressure ΔPlimi (ΔPlpl ≤ ΔPlimit), the routine goes to the step S104.

In the step S103, the EGR control using the low-pressure EGR passage 14 continues with the low-pressure EGR valve 16 kept opened and the opening degrees of the exhaust control valve 11 and the intake control valve 7 adjusted such that the differential pressure ΔPlpl between the inlet and outlet of the low-pressure EGR passage 14 detected by the differential pressure sensor 17 is equal to the specified differential pressure ΔPlimit Concurrently, the high-pressure EGR valve 13 is opened to additionally use the high-pressure EGR passage 12 for EGR with a remainder of the increased required EGR gas flow volume or an excess over the flow volume for the specified differential pressure ΔPlimit. This allows total EGR gas flow volume for the EGR control using both the high-pressure EGR passage and the low-pressure passage to follow the increased required flow volume. The routine then goes to the step S105.

In contrast, in the step S104, the low-pressure EGR valve 16 is kept opened and the exhaust and intake control valves 11 and 7 are controlled such that they move in a further closing direction, in order to increase the differential pressure between the inlet and outlet of the low-pressure EGR passage 14. Accordingly, the EGR gas flow volume under the EGR control using the low-pressure EGR passage 14 increases, thereby to follow the increased required flow volume. Then, the routine goes to the step S105.

In the step S105, a determination is made as to whether or not the EGR gas flow volume under the EGR control meets the required flow volume. The EGR gas flow volume is estimated by the ECU 18 based on the opening degrees of the low-pressure EGR valve 16, the high-pressure EGR valve 13, the exhaust control valve 11, and the intake control valve 7, as well as on the flow volume of exhaust gas and engine operating conditions. In the step S105, if the determination is No, that is, the EGR gas flow volume does not meet the required flow volume, the routine returns to the step S102. On the other hand, if the determination is Yes, that is, the EGR gas flow volume meets the required flow volume, the execution of the routine is terminated.

According to the routine described above, when the differential pressure sensor 17 detects that the differential pressure ΔPlpl between the inlet and outlet of the low-pressure EGR passage 14 is greater than the specified differential pressure ΔPlimit, the EGR control is performed with the combined use of the low-pressure EGR passage 14 and the high-pressure EGR passage 12 in order to meet the required flow volume. To achieve this, the low-pressure EGR passage 14 is used for EGR up to a flow volume that corresponds to the specified differential pressure ΔPlimit. In addition, the high-pressure EGR passage 12 is also used for EGR with a flow volume equivalent to the excess over the flow volume for the specified differential pressure ΔPlimit. This prevents the differential pressure between the inlet and outlet of the low-pressure EGR passage 14 from excessively increasing, while attaining a large volume of EGR in accordance with the required flow volume.

The description of the first embodiment is directed not only to the EGR control using the low-pressure EGR passage alone, but also to the EGR control with the combined use of the low-pressure EGR passage and the high-pressure EGR passage, in order to prevent the differential pressure between the inlet and outlet of the low-pressure EGR passage from excessively increasing. However, the present invention is not limited to the first embodiment. For instance, during the EGR control using both the low-pressure EGR passage and the high-pressure EGR passage, when the differential pressure sensor detects a differential pressure greater than the specified differential pressure, the low-pressure EGR passage is used for EGR with a flow volume equivalent to a differential pressure equal to or smaller than the specified differential pressure, while the high-pressure EGR passage is used for EGR with a remainder of the required exhaust gas flow volume or an excess over the flow volume for the specified differential pressure. Alternatively, the low-pressure EGR passage may be used not for EGR with a flow volume equivalent to a differential pressure equal to or smaller than the specified differential pressure, but for EGR with a flow volume equivalent to the specified differential pressure, that is, a maximum differential pressure between the inlet and outlet of the low-pressure EGR passage at which pumping losses in the internal combustion engine do not increase, while the lowering of fuel efficiency is inhibited.

[Second Embodiment] The second embodiment is directed to EGR control by taking the temperature of coolant flowing around the internal combustion engine 1 into consideration. Descriptions will be only made of components different from those in the first embodiment. Common components to the first embodiment are not described repeatedly.

At the low temperature of coolant flowing around the internal combustion engine 1, exhaust gas from the internal combustion engine 1 contains high concentration of HC. When the exhaust gas containing high concentration of HC passes through the valves, it may cause the valves to be stuck in the open or closed position. Therefore, it is desired to avoid the use of such exhaust gas for EGR through the high-pressure EGR passage 12 when the exhaust gas can possibly pass directly through the high-pressure EGR passage 12.

In turn, no exhaust gas containing high concentration of HC passes directly through the low-pressure EGR passage 14 because the filter 10, which is located upstream of the inlet of the low-pressure EGR passage 14 for drawing exhaust gas, blocks high concentration of HC.

Thus, according to the second embodiment, in the case that the coolant temperature, detected by the coolant temperature sensor 19 shown in FIG. 1, is equal to or lower than a specified temperature, even though the differential pressure sensor 17 detects a differential pressure greater than a specified differential pressure preset for the low-medium engine speed and low-medium load range during the EGR control using the low-pressure EGR passage 14 alone, the EGR control using the high-pressure EGR passage 12 is prohibited.

More specifically, during the EGR control using the low-pressure EGR passage 14 alone in order to meet a required EGR gas flow volume, the actual EGR gas flow volume increases as the required flow volume increases in the low-medium engine speed and low-medium load range, and accordingly, the differential pressure sensor 17 detects a differential pressure greater than the specified differential pressure. Even under such conditions, the high-pressure EGR passage 12 is not additionally used for EGR, but the EGR control using the low-pressure EGR passage 14 alone continues, if the coolant temperature is equal to or lower than the specified temperature.

This prevents recirculation of the exhaust gas, containing high concentration of HC and emitted from the internal combustion engine through the high-pressure EGR passage 12 due to the low coolant temperature, so that no such exhaust gas passes through the high-pressure EGR valve 13 disposed inside the high-pressure EGR passage 12. This therefore prevents the high-pressure EGR valve 13 from being stuck in the open or closed position due to the passage of exhaust gas containing high concentration of HC through the high-pressure EGR valve 13. Accordingly, more reliable performance of the high-pressure EGR passage 12 is ensured.

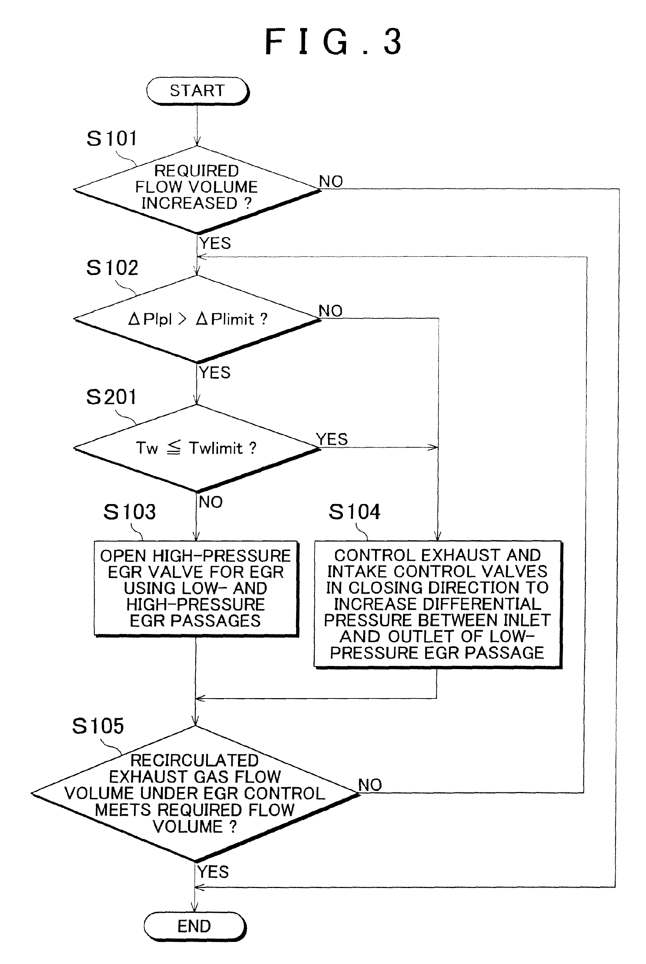

Now, a routine of the EGR control using the low-pressure EGR passage 14 and the high-pressure EGR passage 12 according to the second embodiment will be described below with reference to a flowchart in FIG. 3. It should be noted that this routine, stored in the ECU 18 in advance, is executed at predetermined time intervals during the EGR control using the low-pressure EGR passage 14 alone with the low-pressure EGR valve 16 opened under operation of the internal combustion engine 1.

The steps S101 and S102 in this routine are the same as those described in the first embodiment. In the step S102, if the determination is Yes, that is, the differential pressure ΔPlpl between the inlet and outlet of the low-pressure EGR passage 14 is greater than the specified differential pressure ΔPlimit (ΔPlpl > ΔPlimit), the routine goes to the step S201.

In the step S201, a determination is made as to whether or not a coolant temperature Tw in the internal combustion engine 1, detected by the coolant temperature sensor 19, is equal to or lower than a specified temperature Twilimit (Tw ≤ Twlimit ?). The specified temperature Twlimit is considered as a threshold under which high concentration of HC is emitted from the internal combustion engine 1.

In the step S201, if the determination is No, that is, the coolant temperature Tw is not equal to or lower than the specified temperature Twlimit (Tw > Twlimit), the routine goes to the step S103. On the other hand, if the determination is Yes, that is, the coolant temperature Tw is equal to or lower than the specified temperature Twlimit (Tw ≤ Twlimit), the routine goes to the step S104.

The following steps S103 to S105 are the same as those described in the first embodiment.

According to the routine previously stated, if the coolant temperature sensor 19 detects that the coolant temperature Tw is equal to or lower than the specified temperature Twlimit, the EGR control using the high-pressure EGR passage 12 is prohibited, even though the differential pressure sensor 17 detects that the differential pressure ΔPlpl between the inlet and outlet of the low-pressure EGR passage 14 is greater than the specified differential pressure ΔPlimit. This therefore prevents the high-pressure EGR valve 13 from being stuck in the open or closed position due to the passage of exhaust gas containing high concentration of HC through the high-pressure EGR valve 13. Accordingly, more reliable performance of the high-pressure EGR passage 12 is ensured.

[Third Embodiment] The third embodiment is directed to EGR control by taking transient conditions of the internal combustion engine 1, such as acceleration and deceleration of the vehicle, into consideration. Descriptions will be only made of components different from those in the first embodiment. Common components to the first embodiment are not described repeatedly.

Under the transient accelerating condition of the vehicle, the flow velocity (flow volume) of exhaust gas through the exhaust passage varies before and after the acceleration. Accordingly, under such transient accelerating condition, the differential pressure sensor 17 may temporarily detect a differential pressure greater than the specified differential pressure ΔPlimt described in the first embodiment. In this case, the EGR control is shifted from the use of the low-pressure EGR passage 14 alone to the combined use of the low-pressure EGR passage 14 and the high-pressure EGR passage 12 as described in the first embodiment. This may result in a rise in intake temperature from the steady-state value and emission of excessive exhaust smoke.

Therefore, according to the third embodiment, under the transient accelerating condition of the vehicle, a specified differential pressure, to be compared with a differential pressure detected by the differential pressure sensor 17, is preset larger than the steady-state value.

More specifically, if the vehicle is determined to be in a transient accelerating condition based on the engine speed calculated from a value detected by the crank position sensor 20 as well as on the engine load calculated from a value detected by the accelerator opening sensor 21, a specified differential pressure for transient acceleration is redefined as (ΔPlimit + ΔPt1) by adding a correction differential pressure ΔPt1 to the specified differential pressure ΔPlimit described in the first embodiment 1. Even if the differential pressure sensor 17 detects a differential pressure greater than the specified differential pressure (ΔPlimit + ΔPtl), the EGR control using the low-pressure EGR passage 14 is performed with an EGR gas flow volume such that the differential pressure between the inlet and outlet of the low-pressure EGR passage 14 remains not greater than the specified differential pressure (ΔPlimit + ΔPtl), but equal to or lower than the specified differential pressure (ΔPlimit + ΔPtl). In combination with this, the high-pressure EGR passage 12 is also used for EGR with a remainder of the required flow volume or an excess over the flow volume for the specified differential pressure (ΔPlimit + ΔPtl).

According to the third embodiment, a temporal rise in differential pressure between the inlet and outlet of the low-pressure EGR passage 14 occurs under a transient accelerating condition of the vehicle. Accordingly, the specified differential pressure is increased by the correction differential pressure and redefined as (ΔPlimit + ΔPtl) to be compared with a differential pressure detected by the differential pressure sensor 17. Therefore, despite the temporal rise in differential pressure between the inlet and outlet of the low-pressure EGR passage 14, the EGR control using the low-pressure EGR passage 14 alone continues without shifting to the combined use of the low-pressure EGR passage 14 and the high-pressure EGR passage 12. That is, the situation is avoided, where, upon the temporal rise in differential pressure between the inlet and outlet of the low-pressure EGR passage 14, the EGR control is undesirably shifted from the use of the low-pressure EGR passage 14 alone to the combined use of the low-pressure EGR passage 14 and the high-pressure EGR passage 12. This reduces exhaust smoke due to a rise in intake temperature from the steady-state value, which can result from the EGR control with the combined use of the low-pressure EGR passage 14 and the high-pressure EGR passage 12.

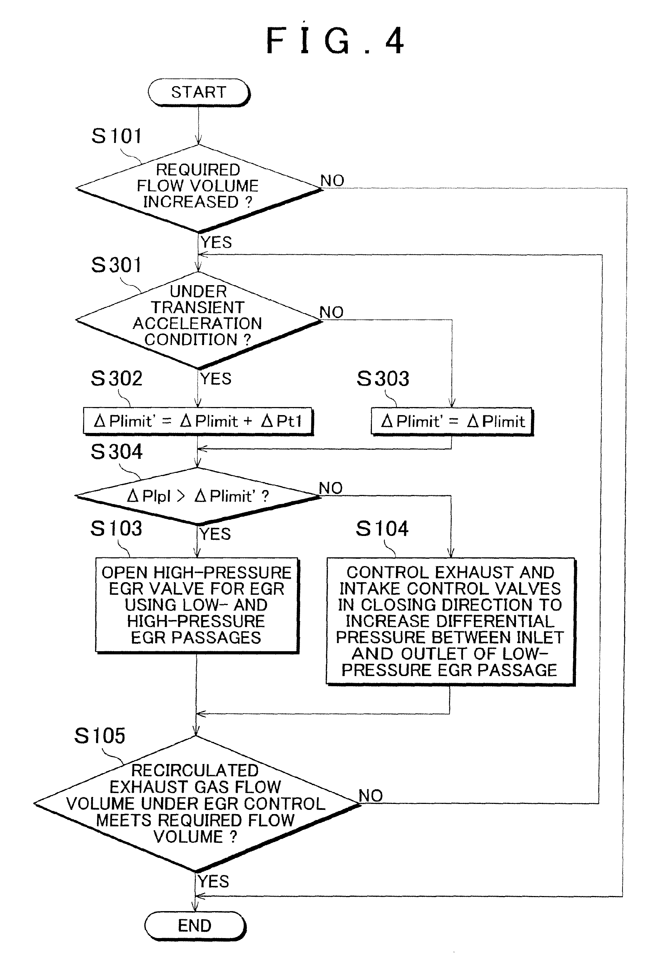

Now, a routine of the first EGR control using the low-pressure EGR passage 14 and the high-pressure EGR passage 12 according to the third embodiment will be described below with reference to a flowchart in FIG. 4. It should be noted that this routine, stored in the ECU 18 in advance, is executed at predetermined time intervals during the EGR control using the low-pressure EGR passage 14 alone with the low-pressure EGR valve 16 opened under operation of the internal combustion engine 1.

The step S101 in this routine is the same as the step S101 in the first embodiment. In the step S101, if the determination is Yes, that is, the required flow volume has increased, the routine goes to the step S301.

In the step S301, a determination is made as to whether or not the vehicle is in a transient accelerating condition based on the engine speed calculated from a value detected by the crank position sensor 20 and on the engine load calculated from a value detected by the accelerator opening sensor 21. In this case, if the vehicle acceleration rate found from the calculated engine speed and load exceeds a specified acceleration rate, the vehicle is determined to be in a transient accelerating condition. The specified acceleration rate is considered as a preset threshold over which the EGR control is undesirably shifted from the use of the low-pressure EGR passage alone to the combined use of the low-pressure EGR passage and the high-pressure EGR passage upon the temporal rise in differential pressure between the inlet and outlet of the low-pressure EGR passage.

In the step S301, if the determination is Yes, that is, the vehicle is in a transient accelerating condition, the routine goes to the step S302. On the other hand, if the determination is No, that is, the vehicle is not in a transient accelerating condition, the routine goes to the step S303.

In the step S302, the specified differential pressure ΔPlimit described in the first embodiment is increased by adding the correction differential pressure ΔPtl. This is redefined as ΔPlimit' (ΔPlimit + ΔPtl) to be compared with a differential pressure ΔPlpl between the inlet and outlet of the low-pressure EGR passage 14 detected by the differential sensor 17 in the step S304 (to be discussed later). The correction differential pressure ΔPtl is a constant differential pressure, which is preset through the experiments and others, and is added when the vehicle is determined to be in a transient accelerating condition. The routine then goes to the step S304.

In the step S303, the specified differential pressure ΔPlimit' is used, in place of ΔPlimit described in the first embodiment, to be compared with a differential pressure ΔPlpl between the inlet and outlet of the low-pressure EGR passage 14 detected by the differential pressure sensor 17 in the step S304 (to be discussed later). The routine then goes to the step S304.

In the step S304, a determination is made as to whether or not the differential pressure ΔPlpl between the inlet and outlet of the low-pressure EGR passage 14, detected by the differential pressure sensor 17, is greater than the specified differential pressure ΔPlimit' (ΔPlpl > ΔPlimit' ?).

In the step S304, if the determination is Yes, that is, the differential pressure ΔPlpl between the inlet and outlet of the low-pressure EGR passage 14 is greater than the specified differential pressure ΔPlimit' (ΔPlpl > ΔPlimit'), the routine goes to the step S103. On the other hand, if the determination is No, that is, the differential pressure ΔPlpl between the inlet and outlet of the low-pressure EGR passage 14 is not greater than the specified differential pressure ΔPlimit' (ΔPlpl ≤ ΔPlimit'), the routine goes to the step S104.

The following steps S103 to S105 are the same as those described in the first embodiment.

According to the routine described above, when the vehicle is in a transient accelerating condition, the specified differential pressure ΔPlimit' (ΔPlimit + ΔPt1) is increased and used to be compared with a differential pressure detected by the differential pressure sensor 17. Thus, despite the temporal rise in differential pressure between the inlet and outlet of the low-pressure EGR passage 14, the EGR control using the low-pressure EGR passage 14 alone continues. This reduces exhaust smoke due to a rise in intake temperature which can result from the EGR control with the combined use of the low-pressure EGR passage 14 and the high-pressure EGR passage 12.

In the routine shown in FIG. 4, acceleration is only considered as transient conditions of the vehicle in the step S301. However, the present invention is not limited to acceleration. The routine shown in FIG. 4 may also be applied under other transient conditions, in which, for instance, at least one of the engine speed and load increases such that a flow velocity (flow volume) of exhaust gas through the exhaust passage varies, causing a temporal rise in differential pressure between the inlet and outlet of the low-pressure EGR passage 14.

In contrast, under the transient decelerating condition of the vehicle, the flow velocity (flow volume) of exhaust gas through the exhaust passage varies before and after the deceleration. Accordingly, under such transient decelerating condition, the differential pressure sensor 17 may temporarily detect a differential pressure smaller than the specified differential pressure ΔPlimit described in the first embodiment. In such case, continuing the EGR control using the low-pressure EGR passage 14 alone increases the volume of the EGR gas through the low-pressure EGR passage 14. This can result in higher pumping losses, causing lower fuel efficiency.

Therefore, according to the third embodiment, under the transient decelerating condition of the vehicle, a specified differential pressure, to be compared with a differential pressure detected by the differential pressure sensor 17, is preset smaller than the steady-state value.

More specifically, if the vehicle is determined to be in a transient decelerating condition based on the engine speed calculated from a value detected by the crank position sensor 20 as well as on the engine load calculated from a value detected by the accelerator opening sensor 21, a specified differential pressure for transient deceleration is redefined as (ΔPlimit - ΔPt2) by subtracting a correction differential pressure ΔPt2 from the specified differential pressure ΔPlimit described in the first embodiment 1. Even if the differential pressure sensor 17 detects a differential pressure greater than the specified differential pressure (ΔPlimit - ΔPt2), the EGR control using the low-pressure EGR passage 14 is performed with an EGR gas flow volume such that the differential pressure between the inlet and outlet of the low-pressure EGR passage 14 remains not greater than the specified differential pressure (ΔPlimit - ΔPt2), but equal to or lower than the specified differential pressure (ΔPlimit - ΔPt2). In combination with this, the high-pressure EGR passage 12 is also used for EGR with a remainder of the required flow volume or an excess over the flow volume for the specified differential pressure (ΔPlimit - ΔPt2).

According to the third embodiment, a temporal drop in differential pressure between the inlet and outlet of the low-pressure EGR passage 14 occurs under a transient decelerating condition of the vehicle. Thus, the specified differential pressure is decreased by the correction differential pressure and redefined as (ΔPlimit - ΔPt2) to be compared with a differential pressure detected by the differential pressure sensor 17. Therefore, despite the temporal drop in differential pressure between the inlet and outlet of the low-pressure EGR passage 14, the EGR control with the use of the low-pressure EGR passage 14 alone is discontinued and shifted to the combined use of the low-pressure EGR passage 14 and the high-pressure EGR passage 12. That is, the situation is avoided, where, upon the temporal drop in differential pressure between the inlet and outlet of the low-pressure EGR passage 14, the EGR control with the use of the low-pressure EGR passage 14 alone undesirably continues without shifting to the combined use of the low-pressure passage 14 and the high-pressure EGR passage 12. This prevents an increase in volume of the EGR gas through the low-pressure EGR passage 14, and consequently prevents higher pumping losses and lower fuel efficiency.

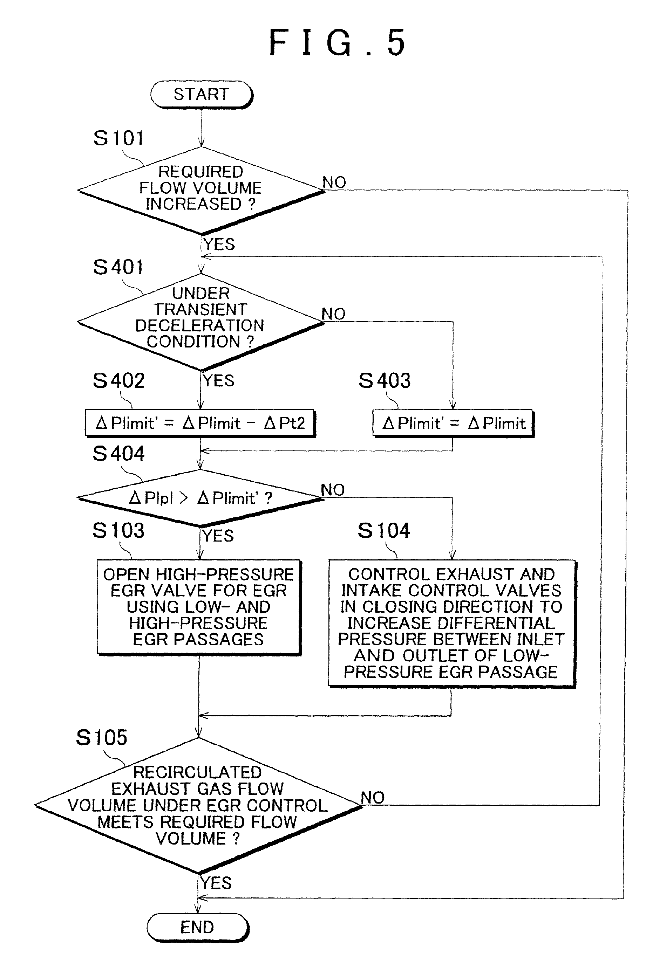

Now, a routine of the second EGR control using the low-pressure EGR passage 14 and the high-pressure EGR passage 12 according to the third embodiment will be described below with reference to a flowchart in FIG. 5. It should be noted that this routine, stored in the ECU 18 in advance, is executed at predetermined time intervals during the EGR control using the low-pressure EGR passage 14 alone with the low-pressure EGR valve 16 opened under operation of the internal combustion engine 1.

The step S101 in this routine is the same as the step S101 in the first embodiment. In the step S101, if the determination is Yes, that is, the required flow volume has increased, the routine goes to the step S401.

In the step S401, a determination is made as to whether or not the vehicle is in a transient decelerating condition based on the engine speed calculated from a value detected by the crank position sensor 20 and on the engine load calculated from a value detected by the accelerator opening sensor 21. In this case, if the vehicle deceleration rate found from the calculated engine speed and load exceeds a specified deceleration rate, the vehicle is determined to be in a transient decelerating condition. The specified deceleration rate is considered as a preset threshold over which the EGR control is not undesirably shifted from the use of the low-pressure EGR passage alone to the combined use of the low-pressure EGR passage and the high-pressure EGR passage upon the temporal drop in differential pressure between the inlet and outlet of the low-pressure EGR passage.

In the step S401, if the determination is Yes, that is, the vehicle is in decelerating transition, the routine goes to the step S402. On the other hand, if the determination is No, that is, the vehicle is not in a transient decelerating condition, the routine goes to the step S403.

In the step S402, the specified differential pressure ΔPlimit described in the first embodiment is decreased by subtracting the correction differential pressure ΔPt2. This is redefined as ΔPlimit' (ΔPlimit - ΔPt2) to be compared with a differential pressure ΔPlpl between the inlet and outlet of the low-pressure EGR passage 14 detected by the differential sensor 17 in the step S404 (to be discussed later). The correction differential pressure ΔPt2 is a constant differential pressure, which is preset through the experiments and others, and is subtracted when the vehicle is determined to be in a transient decelerating condition. The routine then goes to the step S404.

In the step S403, the specified differential pressure ΔPlimit' is used, in place of ΔPlimit described in the first embodiment, to be compared with a differential pressure ΔPlpl between the inlet and outlet of the low-pressure EGR passage 14 detected by the differential pressure sensor 17 in the step S404 (to be discussed later). The routine then goes to the step S404.

In the step S404, a determination is made as to whether or not the differential pressure ΔPlpl between the inlet and outlet of the low-pressure EGR passage 14, detected by the differential pressure sensor 17, is greater than the specified differential pressure ΔPlimit' (ΔPlpl > ΔPlimit' ?).

In the step S404, if the determination is Yes, that is, the differential pressure ΔPlpl between the inlet and outlet of the low-pressure EGR passage 14 is greater than the specified differential pressure ΔPlimit' (ΔPlpl > ΔPlimit'), the routine goes to the step S103. On the other hand, if the determination is No, that is, the differential pressure APlpl between the inlet and outlet of the low-pressure EGR passage 14 is not greater than the specified differential pressure ΔPlimit' (ΔPlpl ≤ ΔPlimit') the routine goes to the step S104.

The following steps S103 to S105 are the same as those described in the first embodiment.

According to the routine described above, when the vehicle is in a transient decelerating condition, the decreased specified differential pressure ΔPlimit' (ΔPlimit - ΔPt2) is used to be compared with a differential pressure detected by the differential pressure sensor 17. Thus, despite the temporal drop in differential pressure between the inlet and outlet of the low-pressure EGR passage 14, the EGR control is shifted to the combined use of the low-pressure EGR passage 14 and the high-pressure EGR passage 12. Therefore, the situation is avoided where the EGR control using the low-pressure EGR passage 14 alone undesirably continues. This prevents an increase in volume of the EGR gas through the low-pressure EGR passage 14, and consequently prevents higher pumping losses and lower fuel efficiency.

In the routine shown in FIG. 5, deceleration is only considered as transient conditions of the vehicle in the step S401. However, the present embodiment is not limited to deceleration. The routine shown in FIG. 5 may also be applied under other transient conditions, in which, for instance, at least one of the engine speed and load decreases such that a flow velocity (flow volume) of exhaust gas through the exhaust passage varies, causing a temporal drop in differential pressure between the inlet and outlet of the low-pressure EGR passage 14.

In the third embodiment, when the vehicle is determined to be in a transient condition, the correction differential pressure ΔPt1 or ΔPt2 is used, which is a preset constant value to be added to or subtracted from the specified differential pressure ΔPlimit described in the first embodiment. Alternatively, the correction differential pressure ΔPt1 or APt2 may be a variable value in response to the transient acceleration or deceleration rate. The value may be read from a map in which ΔPt1 or ΔPt2 increases as the vehicle acceleration or deceleration rate increases.

The EGR control apparatus according to the embodiment of the invention is not limited to the aforementioned embodiments, but may also be subjected to various modifications without departing from the scope of the invention.

## Claims

1. An exhaust gas recirculation control apparatus for an internal combustion engine (1) comprising a turbocharger (6) driven by exhaust gas from the internal combustion engine (1) for forcing air into the engine; a low-pressure EGR passage (14) for drawing part of exhaust gas as EGR gas from an exhaust passage (9) downstream of a turbine of the turbocharger (6) to recirculate the EGR gas into an intake passage (3) upstream of a compressor of the turbocharger (6); a high-pressure EGR passage (12) for drawing part of exhaust gas as EGR gas from the exhaust passage (9) upstream of the turbine of the turbocharger (6) to recirculate the EGR gas into the intake passage (3) downstream of the compressor of the turbocharger (6); and differential pressure detecting means (17) for detecting a differential pressure between an inlet and outlet of the low-pressure EGR passage (14), **characterized in that**
when the differential pressure detecting means (17) detects a differential pressure (ΔPlpl) greater than a specified differential pressure (ΔPlimit, ΔPlimit') during recirculation of the EGR gas, the low-pressure EGR passage (14) is used to recirculate a volume of EGR gas equivalent to a differential pressure equal to or smaller than the specified differential pressure, while the high-pressure EGR passage (12) is used to recirculate a remainder of a required EGR gas flow volume.

2. The exhaust gas recirculation control apparatus for an internal combustion engine (1) according to claim 1, wherein when the differential pressure detecting means (17) detects a differential pressure (ΔPlpl) greater than the specified differential pressure (ΔPlimit, ΔPlimit') during recirculation of the EGR gas, the low-pressure EGR passage (14) is used to recirculate a volume of EGR gas equivalent to the specified differential pressure.

3. The exhaust gas recirculation control apparatus for an internal combustion engine (1) according to claim 1 or 2, wherein the specified differential pressure (ΔPlimit, ΔPlimit') is a maximum differential pressure between the inlet and outlet of the low-pressure EGR passage (14), at which pumping losses in the internal combustion engine (1) do not increase, while lowering of fuel efficiency is inhibited during exhaust gas recirculation using the low-pressure EGR passage (14).

4. The exhaust gas recirculation control apparatus for an internal combustion engine (1) according to any one of claims 1 to 3, wherein when coolant temperature (Tw) in the internal combustion engine (1) is equal to or lower than a specified temperature (Twlimit), recirculation of the EGR gas using the high-pressure EGR passage (12) is prohibited.

5. The exhaust gas recirculation control apparatus for an internal combustion engine (1) according to claim 4, wherein the specified temperature (Twlimit) is an estimated coolant temperature in the internal combustion engine (1) under which high concentration of hydrocarbon (HC) is emitted from the internal combustion engine (1).

6. The exhaust gas recirculation control apparatus for an internal combustion engine (1) according to any one of claims 1 to 5, wherein the specified differential pressure (ΔPlimit, ΔPlimit') is varied depending on transient conditions of the internal combustion engine (1).

7. The exhaust gas recirculation control apparatus for an internal combustion engine (1) according to claim 6, wherein the specified differential pressure (ΔPlimit, ΔPlimit') is preset larger than a specified differential pressure which is preset in a steady state when the vehicle is in a transient acceleration condition that exceeds a specified acceleration rate.

8. The exhaust gas recirculation control apparatus for an internal combustion engine (1) according to claim 6, wherein the specified differential pressure (ΔPlimit, ΔPlimit') is preset smaller than a specified differential pressure which is preset in a steady state when the vehicle is in a transient deceleration condition that exceeds a specified deceleration rate.

9. The exhaust gas recirculation control apparatus for an internal combustion engine (1) according to claim 6, wherein the specified differential pressure (ΔPlimit, ΔPlimit') is preset larger than a specified differential pressure which is preset in a steady state under transient conditions in which at least one of engine speed and load of the internal combustion engine (1) increases.

10. The exhaust gas recirculation control apparatus for an internal combustion engine (1) according to claim 6, wherein the specified differential pressure (ΔPlimit, ΔPlimit') is preset smaller than a specified differential pressure which is preset in a steady state under transient conditions in which at least one of the engine speed and load of the internal combustion engine (1) decreases.

11. A method of controlling an exhaust gas recirculation apparatus comprising a turbocharger (6) driven by exhaust gas from the internal combustion engine (1) for forcing air into the engine; a low-pressure EGR passage (14) for drawing part of exhaust gas as EGR gas from an exhaust passage (9) downstream of a turbine of the turbocharger (6) to recirculate the EGR gas into an intake passage (3) upstream of a compressor of the turbocharger (6); a high-pressure EGR passage (12) for drawing part of exhaust gas as EGR gas from the exhaust passage (9) upstream of the turbine of the turbocharger (6) to recirculate the EGR gas into the intake passage (3) downstream of the compressor of the turbocharger (6); and differential pressure detecting means (17) for detecting a differential pressure (ΔPlpl) between an inlet and outlet of the low-pressure EGR passage (14), the control method comprising the steps of:
recirculating a volume of EGR gas equivalent to a differential pressure equal to or smaller than the specified differential pressure (ΔPlimit, ΔPlimit'), using the low-pressure EGR passage (14); and recirculating a remainder of the required EGR gas volume, using the high-pressure EGR passage (12), when the differential pressure between the inlet and outlet of the low-pressure EGR passage (14) is greater than the specified differential pressure (ΔPlimit, ΔPlimit') during recirculation of the EGR gas.

12. The method of controlling an exhaust gas recirculation apparatus according to claim 11, wherein when the differential pressure between the inlet and outlet of the low-pressure EGR passage (14) is greater than the specified differential pressure (ΔPlimit, ΔPlimit') during recirculation of the EGR gas, the low-pressure EGR passage (14) is used to recirculate a volume of EGR gas equivalent to the specified differential pressure (ΔPlimit, ΔPlimit').

13. The method of controlling an exhaust gas recirculation apparatus according to claim 11 or 12, wherein the specified differential pressure (ΔPlimit, ΔPlimit') is a maximum differential pressure between the inlet and outlet of the low-pressure EGR passage (14), at which pumping losses in the internal combustion engine (1) do not increase, while the lowering of fuel efficiency is inhibited during exhaust gas recirculation using the low-pressure EGR passage (14).

14. The method of controlling an exhaust gas recirculation apparatus according to any one of claims 11 to 13, wherein when coolant temperature (Tw) in the internal combustion engine (1) is equal to or lower than a specified temperature (Twlimit), recirculation of the EGR gas using the high-pressure EGR passage (12) is prohibited.

15. The method of controlling an exhaust gas recirculation apparatus according to claim 14, wherein the specified temperature (Twlimit) is an estimated coolant temperature in the internal combustion engine (1) under which high concentration of hydrocarbon is emitted from the internal combustion engine (1).

16. The method of controlling an exhaust gas recirculation apparatus according to any one of claims 11 to 15, wherein the specified differential pressure (ΔPlimit, ΔPlimit') is varied depending on transient conditions of the internal combustion engine (1).

17. The method of controlling an exhaust gas recirculation apparatus according to claim 16, wherein the specified differential pressure (ΔPlimit, ΔPlimit') is preset larger than a specified differential pressure which is preset in a steady state when the vehicle is in a transient acceleration condition that exceeds a specified acceleration rate.

18. The method of controlling an exhaust gas recirculation apparatus according to claim 16, wherein the specified differential pressure (ΔPlimit, ΔPlimit') is preset smaller than a specified differential pressure which is preset in a steady state when the vehicle is in a transient deceleration condition that exceeds a specified deceleration rate.

19. The method of controlling an exhaust gas recirculation apparatus according to claim 16, wherein the specified differential pressure (ΔPlimit, ΔPlimit') is preset larger than a specified differential pressure which is preset in a steady state under transient conditions in which at least one of the engine speed and load of the internal combustion engine (1) increases.

20. The method of controlling an exhaust gas recirculation apparatus according to claim 16, wherein the specified differential pressure (ΔPlimit, ΔPlimit') is preset smaller than a specified differential pressure which is preset in a steady state under transient conditions in which at least one of the engine speed and load of the internal combustion engine (1) decreases.
